# EUROPEAN PATENT SPECIFICATION

(11) **EP 1 635 439 B1**
(45) Date of publication and mention of the grant of the patent: **30.04.2014**
(21) Application number: 04746131.4
(22) Date of filing: 18.06.2004
(51) Int. Cl.: H02K 1/12, H02K 1/27

(54) **THREE-PHASE SYNCHRONOUS RELUCTANCE MOTOR**
DREIPHASEN-SYNCHRON-RELUKTANZMOTOR
MOTEUR A RELUCTANCE SYNCHRONE A COURANT TRIPHASE

(30) Priority: 19.06.2003 JP 2003174465
(43) Date of publication of application: 15.03.2006
(73) Proprietor: AISIN SEIKI KABUSHIKI KAISHA, Aichi 4488650 (JP)
(72) Inventor: SAKUMA, Masafumi c/o Intellectual Property Dep., Kariya-shi Aichi 448-8650 (JP); FUKUSHIMA, Tomohiro c/o Intellectual Property Dep., Kariya-shi Aichi 448-8650 (JP)
(74) Representative: TBK
(86) International application number: PCT/JP2004/008629
(87) International publication number: WO 2004/114501

(56) References cited:
- EP-A2- 0 860 929
- EP-A2- 1 174 982
- JP-A- 10 080 077
- JP-A- 11 225 452
- JP-A- 56 159 949
- JP-A- 2001 069 711
- JP-A- 2001 309 587
- JP-A- 2002 281 701
- US-B1- 6 470 563

## Description

### Technical Field

The present invention relates to a three-phase synchronous reluctance motor.

### Background Art

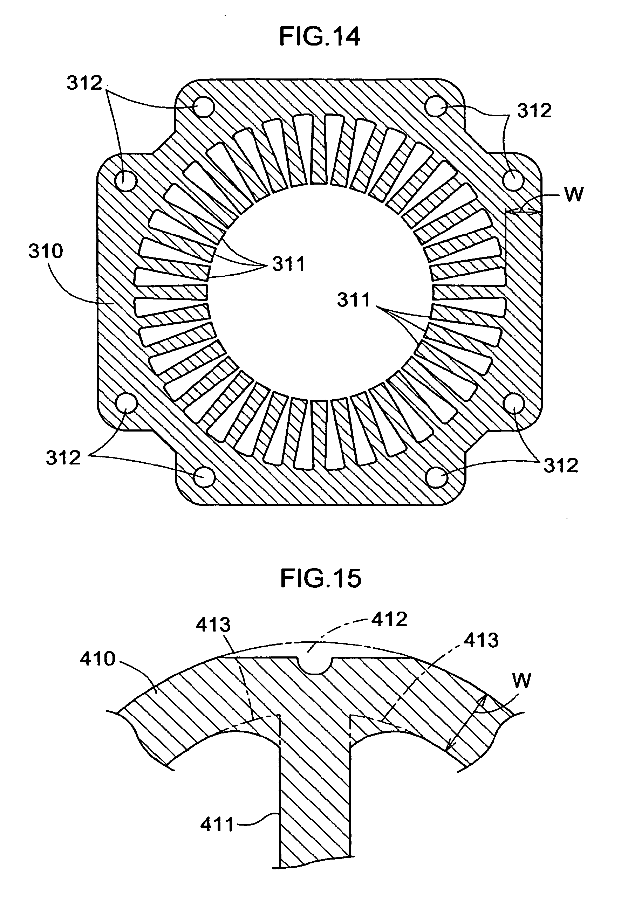

At present, in order to achieve compactness and improved performance of various devices, for a motor as a driving device therefor also, there is a need for such characteristics as improved compactness, high torque, low noise and vibration. There are a great variety of motors available, of which such compactness is said to be obtained with a reluctance motor constructed such that a rotor provided with magnetic saliency is rotatably supported on an inner peripheral side of a stator. For instance, Fig. 14 illustrates an exemplary cross-sectional construction of a stator 310 included in a standard reluctance motor. For obtaining uniformity in the torque generated in the rotating rotor of the reluctance motor, it is required that a magnetic path width W of a back yoke portion of stator teeth 311 be set uniform along the entire periphery thereof. However, bolt holes 312 as shown are provided for fixation of this reluctance motor as well as for its fixation with a bracket (not shown) having a rotor bearing, that is, being provided for obtaining improved handling of the motor. Where these holes are present, it is not possible to set the magnetic path width W of the back yoke portion uniform along the entire periphery.

A different stator construction as illustrated in a partial cross section of Fig. 15 has also been proposed (see Patent Document 1). In the case of a reluctance motor disclosed in this Patent Document 1, for achieving reduction in material cost and improved handling, there are formed core-cut portions 412 in an outer peripheral portion of a stator 410. In conjunction with the formation of these core-cut portions 412, bulging portions 413 are provided beside teeth 411 on the inner peripheral side of a stator 410 in order to ensure a substantially same magnetic path width W of the stator 410 as obtained before cutting the core.

Patent Document 1: Japanese Patent Application "Kokai" No. 2000-350390 (Fig. 10)

Document JP 2001-069711 A discloses a synchronous reluctance motor in which a plurality of teeth are formed at a stator, and the rotor is provided inside of the stator. The stator comprises yoke, which is round shaped with flat portions, so that the width of the yoke is not uniform.

Document JP 11-225452 A discloses a further electric motor, in which one or more notches are formed at the outer periphery of the stator. The notches are formed between parts whose flux density is the smallest, or adjacent slots.

Document EP 0 860 929 discloses a motor as defined in the preamble of claim 1. In particular, this document discloses a permanent magnet type synchronous motor comprising a stator and a rotor inside the stator. The stator comprises an iron core, that is, a back yoke, and a plurality of teeth, wherein at the outer periphery of the stator some recesses are formed.

### Disclosure of the Invention

### Problem To be Solved by Invention

with the reluctance motor disclosed in Patent Document 1, while it is possible to render the magnetic path width W substantially uniform along the entire periphery, the bulging of the side portion of the teeth where the stator windings should be wound prohibits such stator windings from being present at this portion. As a result, the stator can have only a smaller number of stator windings, thus leading to decreased interlinkage flux, hence, to disadvantageous torque reduction. Accordingly, in order to obtain a sufficient torque, enlargement of the entire motor will be inevitably needed.

Further, the prior art has failed to provide any means to tackle the issue of at what specific positions on the outer peripheral face of the stator such geometric features as the core-cut portions disclosed in Patent Document 1 should preferably be located (namely, how motor performance deterioration can be avoided).

The present invention has been made in view of the above-described problem. Its object is to provide a three-phase synchronous reluctance motor which allows its stator to be formed compact by means of reduction in the width of a part of a back yoke portion of a stator while avoiding excessive increase in the magnetic resistance of the magnetic path of the back yoke portion.

### Means to Solve the Problem

This object is solved by three-phase synchronous reluctance motor as defined in claim 1.

### Best Mode of Embodying the Invention

A reluctance motor relating to the present invention will be described with reference to the accompanying drawings.

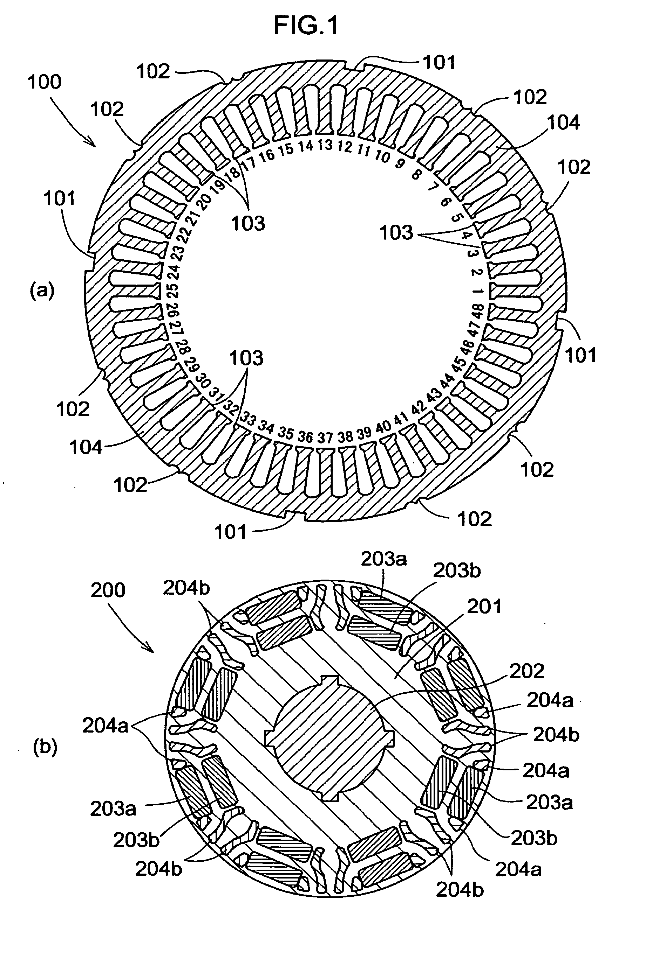

Fig. 1(a) shows an exemplary cross section of a stator 100 constituting a three-phase synchronous reluctance motor relating to the invention. Fig. 1(b) shows a cross section of its rotor 200. The stator 100 includes a plurality of teeth 103 formed along an inner periphery of a back yoke portion 104 and formed in opposition to the rotor 200. Around these teeth 103, stator windings (not shown) are wound in a manner to be described later, thereby forming stator magnetic poles. The rotor 200 is rotatable along the inner surface of the stator 100 about a rotational shaft 202.

The rotor 200 is formed of a rotor core 201 made of a material having high magnetic permeability. Conventionally, this rotor 200 can be a rotor formed of silicon steel or the like and having a number of salient poles. However, this embodiment employs a construction using permanent magnets in the rotor core 201 as such construction allows further compactization. Hence, as shown in Fig. 1(b), the rotor core 201 includes a group of permanent magnets 203a on the outer periphery side and a further group of permanent magnets 203b on the inner periphery side. For each outer periphery side permanent magnet 203a, there is provided an outer periphery side slit 204a adjacent thereto and for each inner periphery side permanent magnet 203b, there is provided an inner periphery side slit 204b adjacent thereto, so that the slits may restrict passage of magnetic force lines. Each adjacent pair of outer periphery side permanent magnet 203a and the inner periphery side permanent magnet 203b have respective portions thereof opposed to each other along a common radial direction oppositely magnetized and are disposed with a predetermined gap therebetween, thereby forming a pair of magnetic poles ("rotor magnetic poles" hereinafter). In this case, the rotor magnetic poles adjacent each other along the outer peripheral face of the rotor 200 form opposite polarities. The rotor 200 has eight rotor magnetic poles in total.

The outer periphery of the stator 100 defines a plurality of small groove portions 102 which function to prevent rotation of the stator 100 when this stator 100 is held and fixed from its outer side. Or, the groove portions 102 are to be used in welding together a plurality of stators 100 superposed on each other. In the stator 100, its back yoke portion 104 includes, at least at one position (four positions in the case of the illustrated example) in its outer peripheral face, a width reducing portion 101 which is formed by cutting away the stator 100 at this position in the form substantially of a rectangle, so that the back yoke portion 104 of the stator 100 has a reduced width at this portion relative to the remaining portion thereof. With this, there are obtained such advantageous effects as compactness, light weight, readiness of handling of the synchronous reluctance motor, etc. without increasing the diameter of the stator 100. And, in the case of the stator 100 and the rotor 200 illustrated in Fig. 1(a) and Fig. 1(b) respectively, the stator 100 has 48 (forty eight) magnetic poles in total and the rotor 200 has 8 (eight) magnetic poles in total. That is, six teeth 103 (stator magnetic poles) are placed in opposition to each single rotor magnetic pole. Incidentally, both the width reducing portion 101 and the groove portion 102 shown as having differing shapes from each other can be freely utilized for "grooves" for anti-rotation or welding. As the functions of the width reducing portion 101 and the groove portion 102 are substantially same, in the following discussion, the disposing or forming position of the width reducing portion 101 alone will be explained. It should be understood, however, the following explanation is applicable also to the groove portion 102.

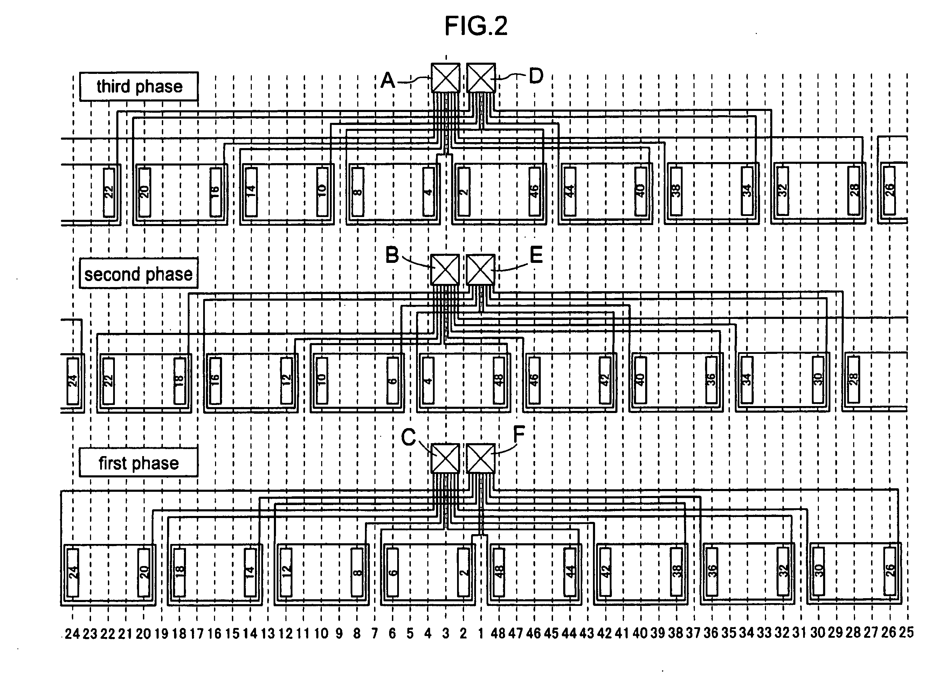

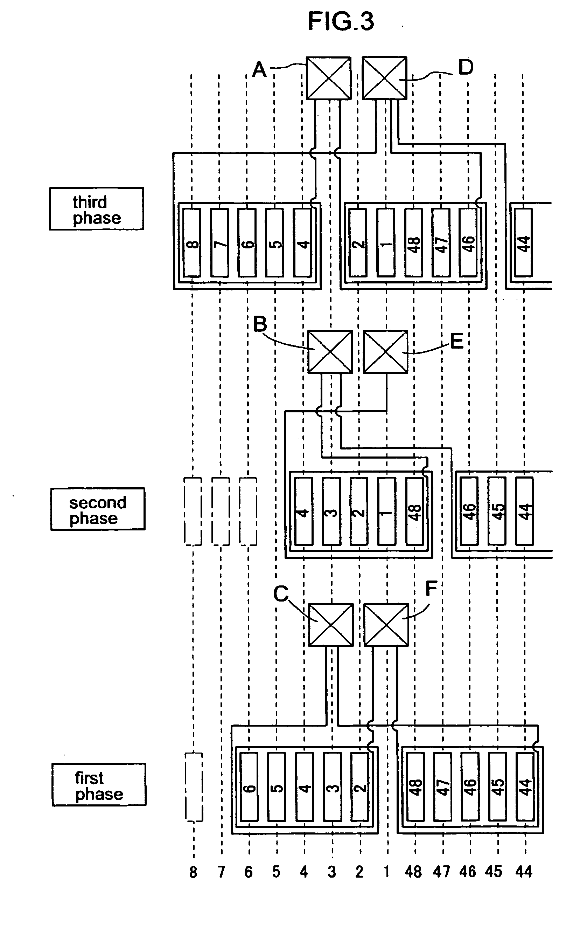

Next, the method of winding the stator windings will be described with reference to Figs. 2 and 3. Fig. 2 is an overall diagram illustrating the method of winding the stator windings, while Fig. 3 is a partially enlarged view of Fig. 2.

Referring to the first phase, the stator windings are wound, with the stator magnetic poles 2-6, 8-12, 14-18, 20-24, 26-30, 32-36, 38-42, 44-48 as coil pitches, respectively and an AC current of a predetermined phase is supplied from power terminals C, F.

Similarly, referring to the second phase, the stator windings are wound, with the stator magnetic poles 6-10, 12-16, 18-22,24-28, 30-34, 36-40, 42-46, 48-4 as coil pitches, respectively and an AC current of a predetermined phase is supplied from power terminals B, E.

Further similarly, referring to the third phase, the stator windings are wound, with the stator magnetic poles 4-8, 10-14, 16-20, 22-26, 28-32, 34-38, 40-44, 46-2 as coil pitches, respectively and an AC current of a predetermined phase is supplied from power terminals A, D. Incidentally, for forming the first phase coils, the second shape coils and the third phase coils into a star-shaped connection configuration, the power terminals D, E, F will be short-circuited to form neutral points.

As described above, in the first phase for example, between each adjacent pair of stator windings which are in the same phase and form opposite magnetic poles when the AC current is supplied to the power terminals C, F, there exist the stator magnetic poles 1, 7, 13, 19, 25, 31, 37 and 43 about which no stator windings are wound. Similarly, in the second phase and the third phase too, there exist such stator magnetic poles without stator windings, but, the explanation thereof will be omitted.

Next, there will be described an exemplary operation of the reluctance motor having the constructions illustrated in Fig. 1(a) and Fig. 1 (b) in case the three-phase stator windings are provided in the manner illustrated in Figs. 2 and 3 for realizing a three-phase drive mode operation. The AC currents supplied for the three-phase drive mode can have such waveforms as three-phase rectangular waves illustrated in Fig. 4 (a) or three-phase sine waves illustrated in Fig. 4 (b).

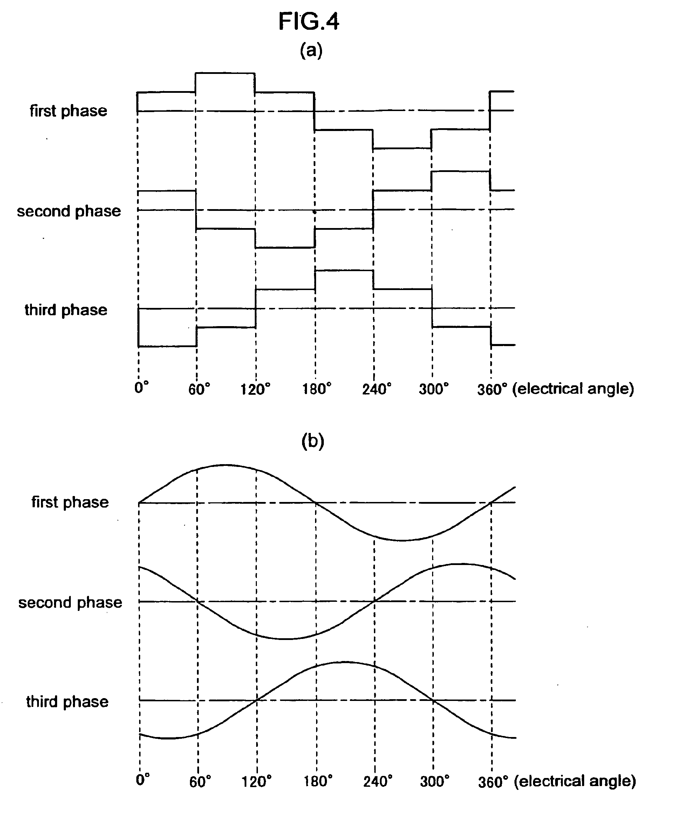

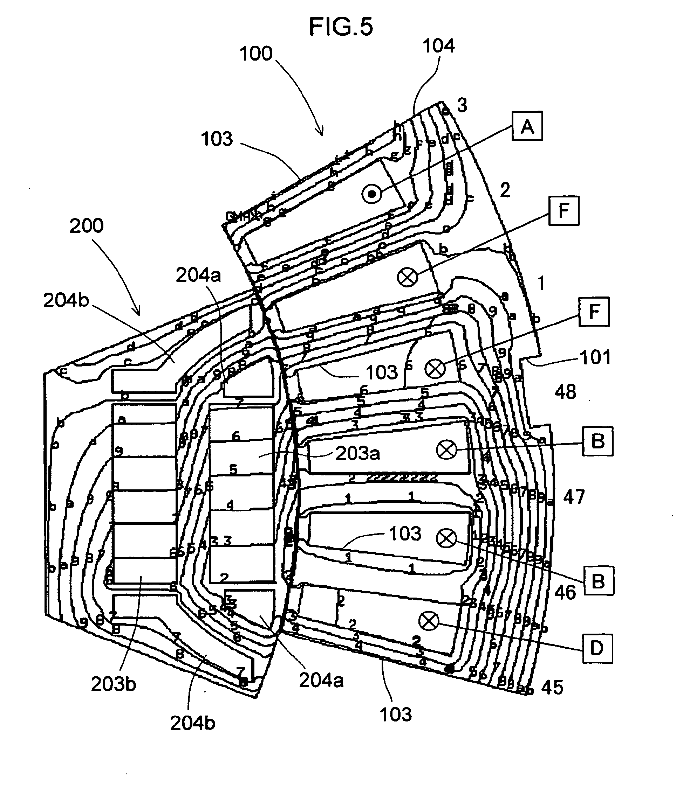

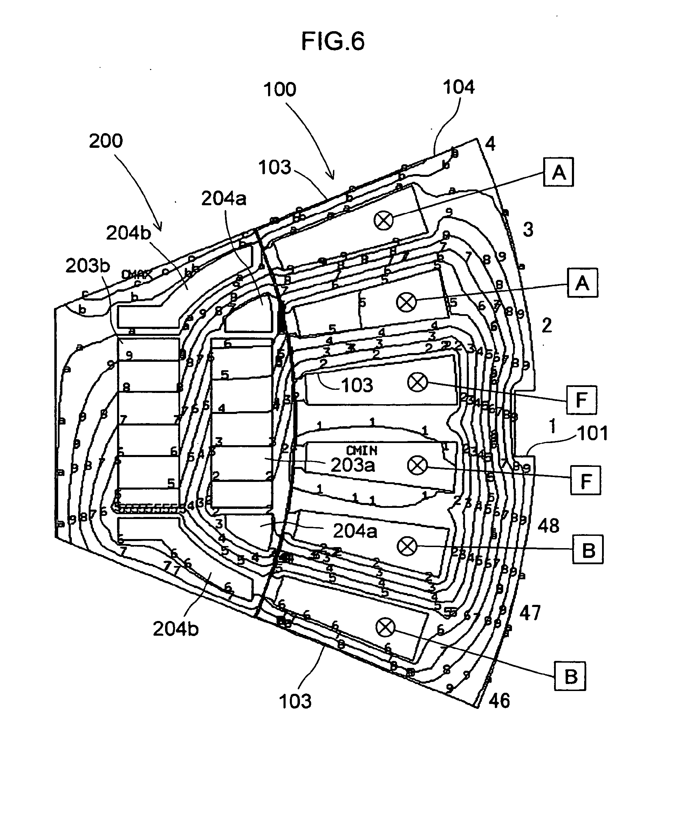

Fig. 5 and Fig. 6 show positional relationship between the rotor 200 and the stator 100 at certain timings during the operation, showing magnetic flux condition (density of magnetic force lines) which occurs when the rotor 200 is driven with supply of AC currents to the stator windings in the form of the three-phase rectangular waves or the three-phase sine waves illustrated in Fig. 4 (a) or Fig. 4 (b). Next, with reference to Figs. 5 and 6, there will be described a preferred forming position of the width reducing portion 101 to be provided in the back yoke portion 104 of the stator 100. Incidentally, for the purpose of simplified illustration, each of these figures shows only one rotor magnetic pole and six teeth 103 (stator magnetic poles) opposed to this one rotor magnetic pole. Further, the connections between the stator windings and the power terminals are also shown schematically.

As shown, the magnetic flux passes with using the back yoke portion 104 of the stator 100 as the magnetic path. Hence, the magnitude of the width of this magnetic path (i.e. acting as the effective magnetic flux path having a width normal to the magnetic force lines) determines the magnitude of magnetic resistance. Therefore, it may be said that it is more advantageous to provide the width reducing portion 101 at a position of lower density of magnetic force lines shown than at a position of high density of the same.

In the case of the stator 100 of the embodiment shown in Fig. 5, the width reducing portion 101 is provided at an outer peripheral portion of the back yoke portion 104 corresponding to the stator magnetic pole 48. In other words, the width reducing portion 101 is provided at the back yoke portion 104 of a tooth adjacent a tooth located between two stator windings which form magnetic poles in a same phase and with differing polarities. For instances referring to Fig. 2, Fig. 3 and Fig. 5, when the power is supplied from the power terminals C, F to the stator winding wound about the stator magnetic poles 2-6, there is generated a magnetic pole extending from the inner peripheral side to the outer peripheral side of the stator 100. Similarly, when the power is supplied from the power terminals C, F to the stator winding wound about the stator magnetic poles 44-48, there is generated a magnetic pole extending from the outer peripheral side to the inner peripheral side of the stator 100. And, the width reducing portion 101 is provided at the back yoke portion 104 of the tooth (stator magnetic pole 48) adjacent the tooth (stator magnetic pole 1) between the above-described two adjacent stator windings. As may be understood from the illustration in Fig. 5, this position is not the position with highest magnetic flux concentration.

Incidentally, although the present embodiment involves the illustration of magnetic flux condition in one particular phase, the same explanation can apply to the other phases also. For example, the preceding discussion concerns the case where the width reducing portion 101 is provided at the outer periphery of the back yoke portion 104 of the stator 101 corresponding to the tooth (stator magnetic pole 48) adjacent to the tooth (stator magnetic pole 1) interposed between a pair of stator windings to which the power is supplied from the power terminals C, F. However, even when the phase is changed, the width reducing portion 101 is still provided in the back yoke portion 104 of the stator 100 corresponding to the tooth (stator magnetic pole 48) adjacent the tooth (stator magnetic pole 47) interposed between the two stator windings to which the power is supplied from the power terminals B, E.

On the other hand, in the case of a comparison example illustrated in Fig.6, the width reducing portion 101 is provided at the back yoke portion 104 of the stator magnetic pole 1. In other words, the width reducing portion 101 is provided at the outer peripheral portion of the back yoke portion 104 corresponding to the tooth interposed between two stator windings which form magnetic poles in a same phase and with opposite polarities. For instance, referring to Fig. 2, Fig. 3 and Fig. 6, when the power is supplied to the stator winding wound about the stator magnetic poles 2-6, there is generated a magnetic pole extending from the inner peripheral side to the outer peripheral side of the stator 100. Similarly, when the power is supplied to the stator winding wound about the stator magnetic poles 44-48, there is generated a magnetic pole extending from the outer peripheral side to the inner peripheral side of the stator 100. And, the width reducing portion 101 is provided at the back yoke portion 104 of the tooth (stator magnetic pole 1) between the above-described two adjacent stator windings. As may be understood from the illustration in Fig. 6, this position is one of those positions with highest magnetic flux concentration.

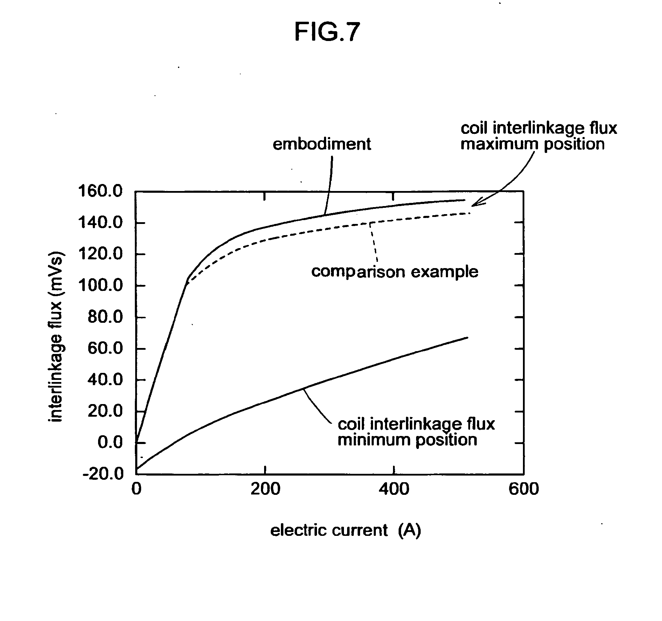

Fig. 7 shows relationship between a supplied current and coil interlinkage flux during a three-phase drive mode operation of the three-phase synchronous reluctance motor having the stator 100 of the Fig. 5 embodiment or the stator 100 of the Fig. 6 comparison example, respectively. In Fig. 7, the solid line represents the embodiment using the stator 100 shown in Fig. 5 and the dot line represents the comparison example using the stator 100 shown in Fig. 6.

As may be seen in Fig. 7, there is no difference in the minimum value of the coil interlinkage flux between the embodiment and the comparison example (in the figure, the solid representing the result of the embodiment and the broken line representing the result of the comparison example are shown as being overlapped with each other). Whereas, the maximum value of the coil interlinkage flux is greater in the embodiment using the stator 100. Hence, it may be understood that the embodiment using the stator 100 provides a greater torque to the rotor 200. In this manner, it has now been found that at what specific position in the back yoke portion 104 of the stator 100 the width reducing portion 101, if needed, should be provided (that is, how deterioration in motor performance can be avoided).

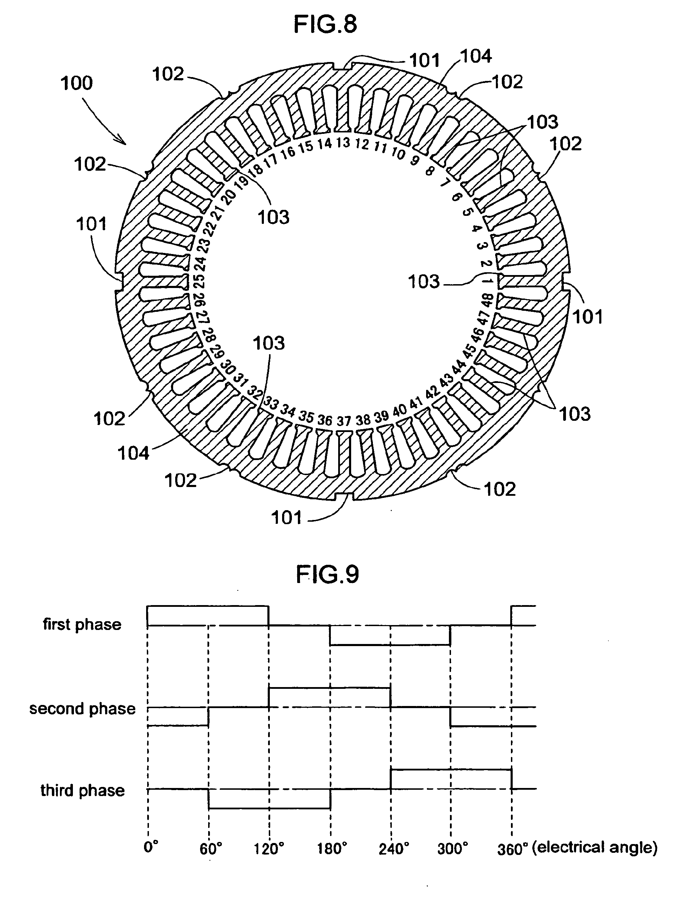

Fig. 8 shows a further stator 100 having a different positional relationship between the stator magnetic pole and the width reducing portion 101 from the stator 100 shown in Fig. 1(a). On the other hand, the winding condition of the stator windings for the stator magnetic poles of the stator 100 is the same as that illustrated in Fig. 2 and Fig. 3. In this case, the stator windings are adapted for receiving two-phase rectangular wave AC currents illustrated in Fig. 9.

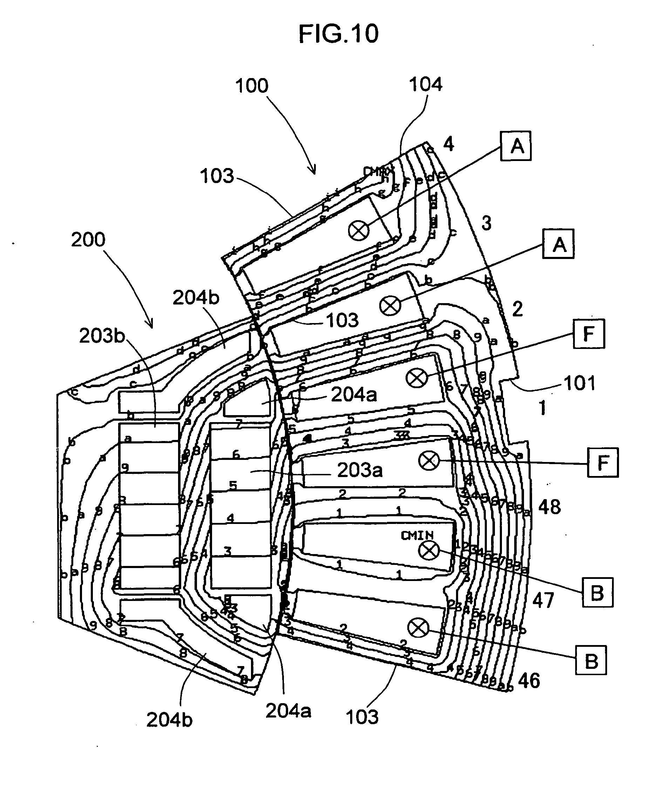

Fig. 10, illustrating an unclaimed example, shows positional relationship between the rotor 200 and the stator 100 at a certain timing during the operation, showing magnetic flux condition which occurs when the rotor 200 is driven with supply of AC currents in the form of the two-phase rectangular waves illustrated in Fig. 9 to the stator windings. Next, with reference to Fig. 10, there will be described a forming position of the width reducing portion 101. Incidentally, for the purpose of simplified illustration, the figure shows only one rotor magnetic pole portion and six teeth 103 (stator magnetic poles) opposed to this one rotor magnetic pole. Further, the connections between the stator windings and the power terminals are also shown schematically.

In the case of the stator 100 of the unclaimed example shown in Fig. 10, the width reducing portion 101 is provided at an outer peripheral portion of the back yoke portion 104 corresponding to the stator magnetic pole 1. In other words, the width reducing portion 101 is provided at the outer peripheral portion of the back yoke portion 104 of the tooth adjacent the tooth located between two stator windings which form magnetic poles in a same phase and with differing polarities. For instance, referring to Fig. 2, Fig. 3 and Fig. 10, when the power is supplied to the stator winding wound about the stator magnetic poles 2-6, there is generated a magnetic pole extending from the inner peripheral side to the outer peripheral side of the stator 100. Similarly, when the power is supplied to the stator winding wound about the stator magnetic poles 44-48, there is generated a magnetic pole extending from the outer peripheral side to the inner peripheral side of the stator 100. And, the width reducing portion 101 is provided at the back yoke portion 104 of the tooth (stator magnetic pole 1) between the above-described two adjacent stator windings. As may be understood from the illustration in Fig. 10, this position is not the position with highest magnetic flux concentration.

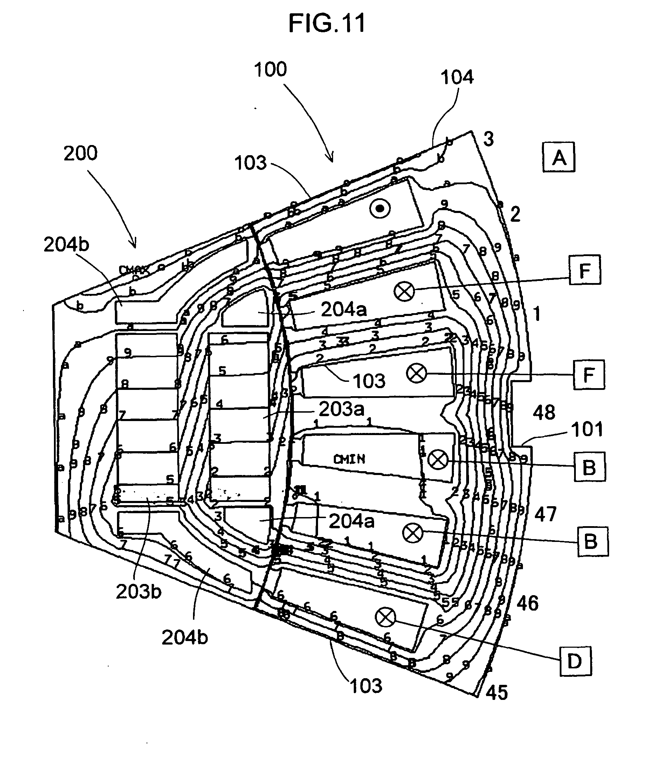

On the other hand, in the case of a comparison example illustrated in Fig. 11, the width reducing portion 101 is provided at the outer peripheral portion of the back yoke portion 104 of the stator magnetic pole 48. In other words, the width reducing portion 101 is provided at the back yoke portion 104 corresponding to the tooth adjacent to the tooth interposed between two stator windings which form magnetic poles in a same phase and with opposite polarities. For instance, referring to Fig. 2, Fig. 3 and Fig. 11, when the power is supplied to the stator winding wound about the stator magnetic poles 2-6, there is generated a magnetic pole extending from the inner peripheral side to the outer peripheral side of the stator 100. Similarly, when the power is supplied to the stator winding wound about the stator magnetic poles 44-48, there is generated a magnetic pole extending from the outer peripheral side to the inner peripheral side of the stator 100. And, the width reducing portion 101 is provided at the back yoke portion 104 of the adjacent tooth (stator magnetic pole 48) adjacent to the tooth (stator magnetic pole 1) between the above-described two adjacent stator windings. As may be understood from the illustration in Fig. 11, this position is one of those positions with highest magnetic flux concentration.

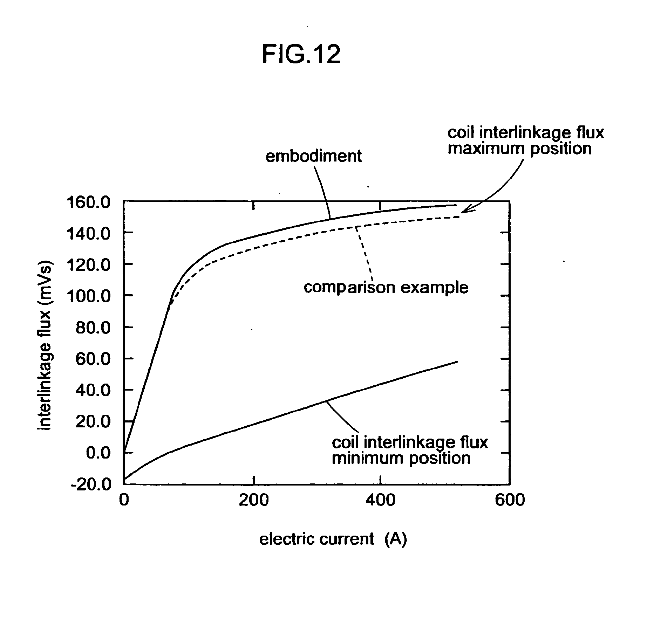

Fig. 12 shows relationship between a supplied current and coil interlinkage flux when the three-phase synchronous reluctance motor having the stator 100 of the unclaimed example of Fig. 10 or the stator 100 of the Fig. 11 comparison example, respectively is operated in a three-phase drive mode. In Fig. 12, the solid line represents the embodiment using the stator 100 shown in Fig. 10 and the dot line represents the comparison example using the stator 100 shown in Fig. 11.

As may be seen in Fig. 12, there is no difference in the minimum value of the coil interlinkage flux between the embodiment and the comparison example (in the figure, the solid representing the result of the embodiment and the broken line representing the result of the comparison example are shown as being overlapped with each other). Whereas, the maximum value of the coil interlinkage flux is greater in the embodiment using the stator 100. Hence, it may be understood that the embodiment using the stator 100 provides a greater torque to the rotor 200. In this manner, it has now been found that at what specific position in the back yoke portion 104 of the stator 100 the width reducing portion 101, if needed, should be provided (that is, how deterioration in motor performance can be avoided).

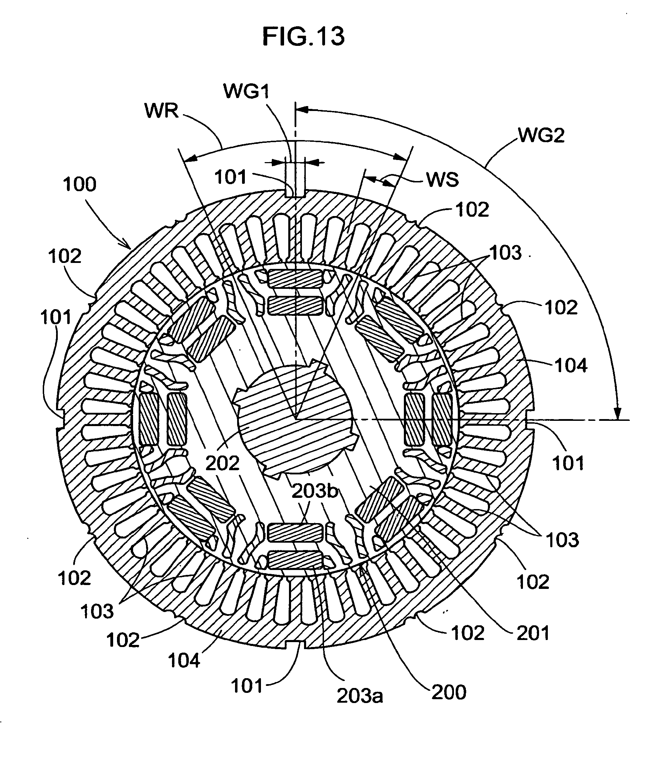

Next, Fig. 13 illustrates relationship among a rotor magnetic pole pitch: WR, a stator magnetic pole pitch WS, a forming area WG1 of the width reducing portion 101, and a pitch WG2 of the width reducing portion 101. As the total eight rotor magnetic pole are provided in this embodiment, the rotor magnetic pole pitch: WR is 45° (360° /8). Also, the total forty-eight stator magnetic poles are provided, the stator magnetic pole pitch: WS is 7.5° (360° /48).

Further, the forming area: WG1 of the width reducing portion 101 along the peripheral direction of the stator 100 is configured to have a peripheral center position thereof aligned with a center position of the tooth (stator magnetic pole) and to be smaller than two pitches (15°) of the teeth (stator magnetic poles). With these arrangements, the width reducing portion 101 will not be formed over the entire back yoke portion 104 of the adjacent tooth (e.g. the teeth forming the stator magnetic poles 1, 47 in Fig. 1) adjacent the tooth (e.g. the tooth forming the stator magnetic pole 48 in Fig. 1) having this width reducing portion 101 in its back yoke portion 104.

The pitch: WG2 of the width reducing portion 101 is designed to be n/3 (n: a natural number) of the rotor magnetic pole: WR (WR= 45° in this embodiment). In this embodiment, n=6, hence, WG2 =45° x 6/3 =90°.

As this embodiment relates to a three-phase synchronous reluctance motor in which six stator magnetic poles are provided for each rotor magnetic pole, the position in the back yoke portion 104 with the highest magnetic flux concentration is present by every 1/3 pitch of the rotor magnetic pole pitch. Therefore, if the width reducing portion 101 is provided at the position of every n/3 pitch of the rotor magnetic pole pitch, it is possible to avoid coincidence between the position of highest magnetic flux concentration and the position of the width reducing portion 101. As a result, significant increase in the electric resistance of the magnetic path can be avoided, hence, sufficient torque generation can be ensured.

Incidentally, in the figures, the width reducing portion 101 is shown in the form of a substantially rectangular shape. However, the invention does not limit its shape in particular. For instance, it can have a shape such as that of the groove portion 102 or a semi-circular shape shown in Fig. 15 or any other shape such as a semi-oval, semi-rhombus shape, etc.

### Industrial Applicability

The three-phase synchronous reluctance motor according to the present invention can be used as a compact, high-performance motor to be employed in various devices.

### Brief Description of the Drawings

Fig. 1(a) shows a cross section of a stator of a three-phase synchronous reluctance motor,
Fig. 1(b) shows a cross section of a rotor of the three-phase synchronous reluctance motor,
Fig. 2 is a diagram illustrating stator winding condition of three phases,
Fig. 3 is an enlarged view of the stator winding condition shown in Fig. 2,
Fig. 4 (a) is a graph showing waveforms of one cycle of three-phase rectangular waves,
Fig. 4 (b) is a graph showing waveforms of one cycle of three-phase sine waves,
Fig. 5 is a diagram explaining a forming position of a width reducing portion in an embodiment of the invention,
Fig. 6 is a diagram explaining a forming position of a width reducing portion in a comparison example,
Fig. 7 is a graph showing relationship between supplied current and coil interlinkage flux,
Fig. 8 shows a cross section of a stator of a three-phase synchronous reluctance motor,
Fig. 9 is a graph showing waveforms of one cycle of two-phase rectangular waves,
Fig. 10 is a diagram explaining a forming position of a width reducing portion in an unclaimed example,
Fig. 11 is a diagram explaining a forming position of a width reducing portion in a comparison example,
Fig. 12 is a graph showing relationship between supplied current and coil interlinkage flux,
Fig. 13 shows cross sections of a stator and a rotor,
Fig. 14 shows a cross section of a stator of a conventional reluctance motor, and
Fig. 15 shows a partial section of the stator of the conventional reluctance motor.

### Description of Preference Marks

- 1-48: stator magnetic poles
- 100: stator
- 101: width reducing portion
- 102: groove portion
- 103: tooth
- 200: rotor
- 201: rotor core
- 202: rotational shaft
- 203a: magnet
- 203b: magnet
- 204a: slit
- 204b: slit
- 310: stator
- 311: tooth
- 312: bolt hole
- 410: stator
- 411: tooth
- 412: core cut portion
- 413: bulging portion

## Claims

1. A three-phase synchronous reluctance motor having:
a rotor (**200**),
a stator (**100**) having a plurality of teeth (**108**) formed in an inner face thereof along a peripheral direction and in opposition to said rotor (**200**), six of said teeth (**103**) being in opposition to one of a plurality of rotor magnetic poles provided in the rotor (**200**), said stator (**100**) having stator windings by a coil pitch corresponding to five teeth (**103**) of said six teeth (**103**), and
at least one width reducing portion (**101**), which partially narrows a back yoke portion (**104**) of the stator (**100**), the back yoke portion (**104**) forming a magnetic path; wherein
said motor is configured to operate in a three-phase drive mode,
between an adjacent pair of stator windings which from magnetic poles in a same phase and with different polarities, there is a tooth having no stator winding,
said width reducing portion (**101**) is provided in the back yoke portion of the stator corresponding to a tooth (**103**, **48**) adjacent to the tooth (**103**, **1**) of the tooth having no stator winding located between an adjacent pair of said stator windings which form magnetic poles in a same phase and with different polarities, said at least one width reducing portion rendering a width of a magnetic path of the back yoke portion of the stator reduced relative to a width of a magnetic path of the back yoke portion corresponding to the other teeth, whereby said width reducing portion (**101**) is formed at a location different from a location of highest magnetic flux concentration in the magnetic path when operated in a three phase drive mode,
**characterized in that**
the width reducing portion (101) is formed by cutting away the stator (100) in a shape of a rectangle.

2. The three-phase synchronous reluctance motor according to claim 1,
**characterized in that**
a center position of said width reducing portion (101) and a center position of said tooth (103) are aligned with each other along the peripheral direction of the stator (100), and said width reducing portion (101) is formed along the peripheral direction of the stator (100) by an area smaller than two pitches of the teeth (**103**).

3. The three-phase synchronous reluctance motor according to claim 1 or 2,
**characterized in that**
a plurality of said width reduced portions are provided along the peripheral direction of the stator by a pitch of n/3 (n: a natural number) of the pitch of the rotor magnetic poles.

4. The three-phase synchronous reluctance motor according to claim 1,
**characterized in that**
the width reducing portion (**101**) along the peripheral direction of the stator (**100**) is configured to have a peripheral center position thereof aligned with a center position of the tooth and to be smaller than two pitches of the teeth.

## Patentansprüche

1. Drei-Phasen-Synchron-Reluktanzmotor mit
einem Rotor (**200**),
einem Stator (**100**), der eine Vielzahl von Zähnen (**108**) aufweist, die an einer inneren Fläche davon entlang einer Umfangsrichtung und entgegengesetzt zu dem Rotor (**200**) geformt sind, wobei sechs der Zähne (**103**) einem aus einer Vielzahl von in dem Rotor (**200**) vorgesehenen magnetischen Rotorpolen entgegengesetzt sind, wobei der Stator (**100**) Statorwicklungen mit einer Spulenunterteilung entsprechend fünf Zähnen (**103**) der sechs Zähne (**103**) aufweist, und
zumindest einem Breitenreduktionsabschnitt (**101**) der einen Gegenjochabschnitt (**104**) des Stators (**100**) teilweise verengt, wobei der Gegenjochabschnitt (**104**) einen Magnetpfad bildet; wobei
der Motor konfiguriert ist, in einer Drei-Phasen-Antriebsbetriebsart zu arbeiten,
zwischen einem benachbarten Paar Statorwicklungen, die Magnetpole in derselben Phase mit unterschiedlichen Polaritäten bilden, es einen Zahn ohne Statorwicklung gibt,
der Breitenreduktionsabschnitt (**101**) in dem Gegenjochabschnitt des Stators entsprechend einem Zahn (**103**, **48**) vorgesehen ist, der benachbart zu dem Zahn (**103**, **1**) der Zähne ohne Statorwicklung ist, der zwischen einem benachbarten Paar der Statorwicklungen angeordnet ist, die Magnetpole in derselben Phase und mit unterschiedlichen Polaritäten bilden, wobei der zumindest eine Breitenreduktionsabschnitt bewirkt, dass eine Breite eines Magnetpfads im Vergleich zu einer Breite eines Magnetpfads des Gegenjochabschnitt entsprechend dem anderen Zahn reduziert ist, wodurch der Breitenreduktionsabschnitt (**101**) an einem anderen Ort als der Ort der höchsten Magnetflusskonzentration in dem Magnetpfad bei Betrieb in einer Drei-Phasen-Antriebsbetriebsart geformt ist,
**dadurch gekennzeichnet, dass**
der Breitenreduktionsabschnitt (**101**) durch Wegschneiden des Stators (**100**) in Form eines Rechtecks geformt ist.

2. Drei-Phasen-Synchron-Reluktanzmotor nach Anspruch 1,
**dadurch gekennzeichnet, dass**
eine Mittenposition des Breitenreduktionsabschnitts (**101**) und eine Mittenposition des Zahns (**103**) zueinander entlang der Umfangsrichtung des Stators (**100**) ausgerichtet sind, und der Breitenreduktionsabschnitt (**101**) entlang der Umfangsrichtung des Stators (**101**) bei einem Bereich geformt ist, der kleiner als zwei Unterteilungen der Zähne (**103**) ist.

3. Drei-Phasen-Synchron-Reluktanzmotor nach Anspruch 1 oder 2,
**dadurch gekennzeichnet, dass**
eine Vielzahl der Breitenreduktionsabschnitte entlang der Umfangsrichtung des Stators mit einer Unterteilung von n/3 (**n: eine natürliche Zahl**) der Unterteilung der Rotormagnetpole vorgesehen **sind.**

4. Drei-Phasen-Synchron-Reluktanzmotor nach Anspruch 1,
**dadurch gekennzeichnet, dass**
der Breitenreduktionsabschnitt (**101**) entlang der Umfangsrichtung des Stators (**100**) derart konfiguriert ist, dass dessen Umfangsmittenposition mit einer Zahnmittenposition ausgerichtet ist und dass er kleiner als zwei Unterteilungen der Zähne ist.

## Revendications

1. Moteur à réluctance synchrone triphasé ayant :
un rotor (200),
un stator (100) ayant une pluralité de dents (108) formées dans une face interne de celui-ci le long d'une direction périphérique et s'opposant audit rotor (200), six parmi lesdites dents (103) s'opposant à l'un d'une pluralité de pôles magnétiques du rotor pourvus dans le rotor (200), ledit stator (100) ayant des enroulements du stator à un pas de bobinage correspondant à cinq dents (103) desdites six dents (103), et
au moins une partie de réduction de largeur (101), qui rétrécit partiellement une partie d'empiècement arrière (104) du stator (100), la partie d'empiècement arrière (104) formant un chemin magnétique ; où
ledit moteur est configuré pour fonctionner en mode d'entraînement triphasé,
entre une paire adjacente d'enroulements du stator qui forment des pôles magnétiques dans une même phase et avec des polarités différentes, il existe une dent n'ayant aucun enroulement de stator,
ladite partie de réduction de largeur (101) est prévue dans la partie d'empiècement arrière du stator correspondant à une dent (103, 48) adjacente à la dent (103, 1) de la dent n'ayant aucun enroulement de stator situé entre une paire adjacente desdits enroulements du stator qui forment des pôles magnétiques dans une même phase et avec des polarités différentes, ladite au moins une partie de réduction de largeur rendant une largeur d'un chemin magnétique de la partie d'empiècement arrière du stator réduite par rapport à une largeur d'un chemin magnétique de la partie d'empiècement arrière correspondant aux autres dents, moyennant quoi ladite partie de réduction de largeur (101) est formée au niveau d'un emplacement différent d'un emplacement de la concentration de flux magnétique la plus élevée dans le chemin magnétique lors d'un fonctionnement en mode d'entraînement triphasé,
**caractérisé en ce que**
la partie de réduction de largeur (101) est formée en découpant le stator (100) en forme de rectangle.

2. Moteur à réluctance synchrone triphasé selon la revendication 1,
**caractérisé en ce que**
une position centrale de ladite partie de réduction de largeur (101) et une position centrale de ladite dent (103) sont alignées l'une avec l'autre le long de la direction périphérique du stator (100), et ladite partie de réduction de largeur (101) est formée le long de la direction périphérique du stator (100) à une zone inférieure à deux pas des dents (103).

3. Moteur à réluctance synchrone triphasé selon la revendication 1 ou 2,
**caractérisé en ce que**
une pluralité desdites parties de réduction de largeur sont pourvues le long de la direction périphérique du stator à un pas de n/3 (n : un nombre naturel) du pas des pôles magnétiques du rotor.

4. Moteur à réluctance synchrone triphasé selon la revendication 1,
**caractérisé en ce que**
la partie de réduction de largeur (101) le long de la direction périphérique du stator (100) est configurée de façon à avoir sa position centrale périphérique alignée avec une position centrale de la dent et de façon à être inférieure à deux pas des dents.
